# EUROPÄISCHE PATENTANMELDUNG

(11) **EP 4 707 587 A2**
(43) Veröffentlichungstag der Anmeldung: **11.03.2026**
(21) Anmeldenummer: 26151044.0
(22) Anmeldetag: 12.09.2023
(51) Int. Cl.: F03D 13/20

(54) **VERFAHREN ZUR ERRICHTUNG DES TURMBAUWERKS, UND SYSTEM ZUR HANDHABUNG VON BAUTEILEN EINES TURMBAUWERKS**

(30) Priorität: 23.09.2022 DE 102022124557
(62) Teilanmeldung aus: 23196948.6
(71) Anmelder: Peter Herbers GmbH, 49716 Meppen (DE)
(72) Erfinder: HERBERS, Peter, 49808 Lingen (DE)
(74) Vertreter: Patentanwälte Olbricht Buchhold Keulertz

(57) **Zusammenfassung**

Vorgestellt wird ein Verfahren zur Errichtung eines Turmbauwerks, wobei das Turmbauwerk aus mehreren übereinander gesetzten Ringsegmenten (5) aufgebaut ist und jeweils mehrere, gekrümmte Teilstücke (50) umfangmäßig ein Ringsegment (5) bilden, wobei ein Teilstück (50) umlaufende Kanten in Form jeweils einer Ober- und Unterkante (501a, 501b) und zweier Radialflächen (502) aufweist sowie eine innere und eine äußere Tangentialfläche (500a, 500b), wobei eine Tangentialfläche wenigstens zwei Aussparungen (51) aufweist, die dazu bestimmt sind, Lastaufnahmemittel einer Hebevorrichtung aufzunehmen, mit den folgenden Verfahrensschritten: a) Positionieren von mehreren Teilstücken (50) auf einem Untergrund mittels einer als Haltevorrichtung (2) bezeichneten Hebevorrichtung, in der Art, dass Radialflächen (502) der Teilstücke (50) einander anliegen, wobei die Lastaufnahmemittel der Haltevorrichtung (2) in Eingriff gebracht werden mit den Aussparungen (51) des Teilstücks (50), und verbinden der Teilstücke (50) miteinander ausbildend ein Ringsegment (5), b) Heben eines Ringsegments (5) mittels einer als Hubvorrichtung (3) bezeichneten Hebevorrichtung auf die erforderliche Höhe zur Errichtung des Turmbauwerks, wobei die Lastaufnahmemittel der Hubvorrichtung (3) in Eingriff gebracht werden mit den Aussparungen (51) des Ringsegments (5). Weiterhin wird ein System (1) zur Handhabung von Bauteilen vorgeschlagen.

## Beschreibung

Die Erfindung betrifft ein Handhabungssystem von Bauteilen eines Turmbauwerks, insbesondere ein nachfolgend kurz als Turm bezeichnetes Turmbauwerk einer Windkraftanlage, nach den Merkmalen des Anspruchs 1 und ein Verfahren zur Errichtung des Turmbauwerks nach Anspruch 8.

Türme der bekannten Art sind regelmäßig aus mehreren übereinandergesetzten Ringsegmenten aufgebaut, welche im Wesentlichen Hohlzylindern ähneln. Der Durchmesser eines Turms, beziehungsweise der Ringsegmente ist häufig abnehmend ausgestaltet, in der Art, dass sich ein Turm von unten nach oben verjüngt. Jeweils mehrere, dem Radius eines Ringsegments entsprechend gekrümmte Teilstücke bilden umfangmäßig ein Ringsegment. Jedes Teilstück weist vier umlaufende Kanten auf: Als Oberkante wird vorliegend die Deckfläche bezeichnet und die Grundfläche als Unterkante. Die zwei Radialflächen bilden die Seitenkanten. Die inneren und äußeren Mantelflächen eines Ringsegments werden vorliegend als innere und äußere Tangentialflächen der Teilstücke bezeichnet, wobei die innere Tangentialfläche eines Ringsegments einen freien Innenraum umgibt. Regelmäßig bilden drei oder vier Teilstücke, welche über die Radialflächen miteinander verbunden sind, ein Ringsegment.

Stellvertretend wird im Folgenden ausschließlich Bezug genommen auf einen Turm mit kreisrundem Querschnitt, wobei die Neuerung nicht darauf beschränkt ist, sondern auch beispielsweise Türme mit polygonalem Querschnitt betreffen kann.

Für die Errichtung eines Turms bedarf es der Handhabung der Teilstücke beziehungsweise der Ringsegmente, das heißt, diese Bauteile sind zu halten, zu laden, zu transportieren, zu positionieren, zu heben und/oder auszurichten. Insbesondere die Teilstücke und Ringsegmente, welche im unteren Bereich eines Turms verbaut werden, können als großdimensionierte Bauteile ausgestaltet sein, mitunter aufweisend ein Gewicht von bis zu 120 t.

Aus der Praxis ist bekannt, mit diversen Hebevorrichtung die Bauteile handzuhaben, indem die Hebevorrichtungen beispielsweise mit dem Hebezeug eines Krans oder dergleichen verbunden wird und das Bauteil mit den Hebevorrichtungen wahlweise lösbar verbunden wird. Dazu weisen die Hebevorrichtungen Lastaufnahmemittel auf, insbesondere Lasthaken oder dergleichen, in welche Anhängemittel der Bauteile eingehängt werden, beispielsweise Schlingen, Ösen oder Ähnliches. Für die Montage der Anhängemittel werden regelmäßig bereits bei der Herstellung der Teilstücke Montageanker in die Oberkante einbetoniert oder es werden Gewindebohrungen eingebracht, in welche Gewindeanker oder Ähnliches eingeschraubt werden, um eine Hebevorrichtung mit einem Teilstück wahlweise lösbar verbinden zu können.

Problematisch ist, dass die Anhängemittel beziehungsweise die Anker nach der Handhabung der Bauteile stets entfernt werden müssen, um den Turm durch das Aufeinandersetzen mehrerer Ringsegmente errichten zu können. Sowohl die Montage als auch die Demontage der Anhängemittel erfolgen in der Praxis grundsätzlich manuell, wobei das damit betraute Personal regelmäßig unter Zuhilfenahme von Leitern in Arbeitshöhen von bis 5 m agiert, beispielsweise bei einem Teilstück, welches einer Ladefläche eines Transportfahrzeugs aufliegt. Auch die Verbindung zwischen Lastaufnahme- und Anhängemittel muss manuell gelöst werden. Somit sind die bekannten Systeme zur Handhabung von Teilstücken und Ringsegmenten zum einen kosten- und personalintensiv und zum anderen mit einem nicht unerheblichen Unfallrisiko verbunden.

Der vorliegenden Erfindung liegt die Aufgabe zugrunde, die bekannte Handhabung zu verbessern. Insbesondere sollen die Kosten gesenkt werden und ein Unfallrisiko für das Personal verringert werden.

Gelöst wird die Aufgabe durch ein System nach den Merkmalen des Anspruchs 1 und durch ein Verfahren nach den Merkmalen des Anspruchs 8.

Merkmale der Erfindung werden nachfolgend beschrieben. Diese Gestaltungsmerkmale können im Zusammenhang mit der Erfindung verwirklicht werden oder auch unabhängig von der Erfindung eigenständig erfinderisch sein, und sie können entweder einzeln und unabhängig voneinander oder auch in einer beliebigen Kombination verwirklicht werden, einschließlich der Verwirklichung sämtlicher genannter Merkmale, sofern eine Kombination nicht ausdrücklich oder technisch zwingend ausgeschlossen ist.

Die Erfindung schlägt mit anderen Worten ein Handhabungssystem mit zwei Hebevorrichtungen vor, welche Lastaufnahmemittel aufweisen, die in Eingriff zu bringen sind mit Aussparungen an den Bauteilen, wobei die Aussparungen dazu geeignet sind, die Lastaufnahmemittel zumindest abschnittsweise aufzunehmen. In gleicher Weise dienen die Aussparungen dazu, eine Baugruppe handhaben zu können. Durch den Eingriff kann vorliegend eine belastbare, wahlweise lösbare Verbindung geschaffen werden zwischen einem Bauteil und einer Hebevorrichtung.

Sofern nicht explizit abweichend ausgeführt ist, wird der Begriff Hebevorrichtung im Folgenden im Sinne der Erfindung stellvertretend sowohl für die Haltevorrichtung als auch für die Hubvorrichtung verwendet. Ebenso wird der Begriff Bauteil nachfolgend stellvertretend verwendet für die Begriffe Teilstück und Ringsegment, sofern nicht ausdrücklich auf ein Teilstück oder ein Ringsegment Bezug genommen wird.

Ein wesentliches Merkmal des vorgeschlagenen Systems ist, dass die Aussparungen nicht wie aus der Praxis bekannt an der Oberkante eines Bauteils, sondern an der Tangentialfläche angeordnet sind, wodurch beispielsweise weder der Oberkante noch der Unterkante Elemente der Hebevorrichtung anliegen. Eine derart freie Unterkante ist vorteilhaft, um ein Bauteil vollflächig auf einem Untergrund absetzen zu können, ohne dass Distanzelemente oder Ähnliches zwischen dem Bauteil und dem Untergrund erforderlich sind, um die Hebevorrichtung entfernen zu können. Eine derart freie Oberkante ist vorteilhaft, um ein weiteres Bauteil, insbesondere ein Ringsegment, aufsetzen zu können, und zwar in der Art, dass die Unterkante des oberen Ringsegments der Oberkante des unteren Ringsegments aufliegt, ohne zuvor etwaige Elemente unfallrisikobehaftet entfernen zu müssen.

Weiterhin ist die Verbindung zwischen dem Bauteil und der Hebevorrichtung vorschlagsgemäß ferneinstellbar, das heißt, dass das Personal nicht unmittelbar die Lastaufnahmemittel beziehungsweise die Anhängemittel zur Herstellung der Verbindung oder zum Lösen derselben erfassen muss. Dadurch wird das Unfallrisiko für das Personal erheblich herabsetzt. Insbesondere kann auf einen zeitaufwändigen und risikobehafteten Einsatz von Leitern verzichtet werden.

Überraschender Weise hat sich gezeigt, dass der Herstellungsaufwand für die vorgeschlagenen Aussparungen in einer wirtschaftlichen Gesamtbetrachtung geringer ist als der Ein- und Ausbau der bekannten Anhängemittel. Zudem stellte sich heraus, dass die notwendigen Aussparungen nicht mit einer wesentlichen Schwächung eines Teilstücks oder eines Ringsegments einhergehen, so dass etwa keine umfassenden Ertüchtigungsmaßnahmen innerhalb der Teilstückkonstruktion erforderlich sind.

Vorgeschlagen wird, dass das Handhabungssystem insbesondere eine Haltevorrichtung und eine Hubvorrichtung aufweist. Diese weisen im Wesentlichen die gleichen Lastaufnahmemittel auf und greifen auf dieselben Aussparungen in den Bauteilen zurück. Infolgedessen kann der Investitionskosten- und der Personalaufwand wirtschaftlich vorteilhaft verringert werden. Außerdem können Arbeitsabläufe beschleunigt werden.

Die vorschlagsgemäße Haltevorrichtung dient dem Halten eines Teilstücks, insbesondere während der Entnahme des als Gussteil hergestellten Teilstücks aus einer Gießform und/oder während des Ladens eines Transportfahrzeugs und/oder während der Positionierung eines Teilstücks zur Bildung eines Ringsegments.

In der Praxis werden die gekrümmten Teilstücke regelmäßig als Gussteil gefertigt. Dazu werden Gießformen bereitgestellt, aus denen die Teilstücke als Betonfertigteile entnommen werden, und zwar durch Anhängen an eine aus der Praxis bekannten Hebevorrichtung - wie zuvor beschrieben, wobei das Ein- und Aushängen ebenso manuell erfolgt und das Personal auch dabei grundsätzlich auf Leitern oder dergleichen stehend agiert.

Vorgeschlagen wird, dass die Haltevorrichtung ein abgebundenes, ausgehärtetes Teilstück halten kann, währenddessen es aus einer Gießform entnommen wird. Dazu werden die Lastaufnahmemittel mit wenigstens zwei Aussparungen eines Teilstücks in Eingriff gebracht und anschließend aus der Gießform gehoben. Weiterhin kann die Haltevorrichtung beispielsweise zum Verbringen eines Teilstücks innerhalb eines Betonfertigteillagers dienen. Ferner kann die Haltevorrichtung zum Halten eines Teilstücks beim Be- und/oder Entladen eines Transportmittels dienen, wie beispielsweise ein Luft-, Land-, und/oder Wasserfahrzeug. Auf einem Montageplatz kann die Haltevorrichtung ein Teilstück halten während der Positionierung des Teilstücks auf einem Untergrund. Mehrere Teilstücke werden benachbart zueinander positioniert und derart angenähert, dass die Teilstücke miteinander verbunden werden können, beispielsweise mittels Klebverbindung oder Schraubverbindung, zur Bildung eines Ringsegments. Die Verbindung zwischen den Teilstücken weist eine hinreichende Festigkeit auf, so dass ein Ringsegment im Anschluss an die Montage im Wesentlichen als quasi monolithisches Objekt handhabbar ist.

Die vorschlagsgemäße Hubvorrichtung dient bei der Errichtung eines Turms zum Heben eines Ringsegments auf eine erforderliche Höhe und/oder zum Ausrichten eines Bauteils.

Insbesondere um Arbeitsabläufe bei der Errichtung eines Turms zu beschleunigen, kann vorgesehen sein, dass mittels der vorgeschlagenen Hubvorrichtung zwei Ringsegmente gleichzeitig in Art eines Tandemhubs auf eine erforderliche Höhe gehoben worden, wobei dabei ein zweites Ringsegment auf einem ersten Ringsegment aufliegend angeordnet ist, die Hubvorrichtung jedoch nur mit dem ersten Ringsegment in Eingriff steht.

Weiterhin kann eine Hubvorrichtung dazu bestimmt sein, ein Bauteil auszurichten. Insbesondere beim Absetzen von Ringsegmenten auf bereits bestehenden Ringsegmenten kann eine Ausrichtung von Teilstücken beziehungsweise des Ringsegments erforderlich sein, um die erforderlichen Spaltmaße oder dergleichen gewährleisten zu können. Vorschlagsgemäß kann die Hubvorrichtung vor diesem Hintergrund dazu geeignet sein, insbesondere Druckkräfte in die Tangentialwand eines Bauteils einleiten zu können, so dass diese präzise relativ zu bereits positionierten Teilstücken oder bereits gesetzten Ringsegmenten ausgerichtet werden können.

Vorteilhafte Weiterentwicklungen der Erfindungen können insbesondere die Aussparungen betreffen. Zunächst kann in einer besonders bevorzugten Ausgestaltung die innere Tangentialwand eines Bauteils die Aussparungen aufweisen. Dies führt dazu, dass der Eingriff der Lastaufnahmemittel in dieser Ausgestaltung stets über die innere Tangentialfläche der Bauteile erfolgt. Für die Haltevorrichtung kann dadurch konstruktiv eine leichter einstellbare Schwerpunktlage eines Teilstücks erzielt werden. Ein schwerpunktoptimiertes Halten der Teilstücke ist von Bedeutung, um die Teilstücke beispielsweise präzise positionieren zu können. Für die Hubvorrichtung ist ein von radial innen nach außen gerichteter Eingriff beispielsweise von Vorteil, um eine schlanke, materialsparende Konstruktion der Hubvorrichtung verwirklichen zu können.

Weiterhin kann vorgesehen sein, dass die Aussparungen als Durchgangsöffnungen ausgestaltet sind, in der Art, dass die Aussparung die innere Tangentialfläche durchgreifbar mit der äußeren Tangentialfläche verbindet.

Unter anderem einer kontrollierten Ausrichtung und vereinfachten Stabilisierung eines Teilstücks zuträglich, währenddessen es gehalten oder gehoben wird, kann vorgesehen sein, dass wenigstens zwei Aussparungen umfangmäßig beabstandet voneinander angeordnet sind, das heißt, dass wenigstens zwei Aussparungen im Wesentlichen nebeneinander angeordnet sind, wobei ein annähernd horizontaler Abstand zwischen diesen variieren kann. So können die beiden Aussparungen beispielsweise jeweils nahe zu einer Radialfläche eines Teilstücks angeordnet sein, so dass der Abstand zwischen den Aussparungen vergleichsweise groß ist. Im Gegensatz dazu ist der Abstand zwischen den Aussparungen gering, sofern die Aussparungen jeweils vergleichsweise weit von den Radialflächen beabstandet angeordnet sind. Dieser Abstand zwischen den Aussparungen kann die Schwerpunktlage insbesondere der Teilstücke während des Haltens beeinflussen, so dass vorliegend vorgesehen sein kann, die Lage der Anbindung der Haltevorrichtung an das Hebezeug eines Krans oder gleichen an der Anordnung der Aussparungen auszurichten.

In einer Weiterentwicklung können zumindest die umfangmäßig voneinander beabstandeten Aussparungen ebenengleich angeordnet sein, so dass die Aussparungen an der Tangentialwand auf im Wesentlichen derselben Höhe angeordnet sind. Dies hat den Vorteil, dass die Lastaufnahmemittel der vorgeschlagenen Hebevorrichtungen ebenfalls ebenengleich angeordnet werden können. Dadurch wird die Handhabung dahingehend flexibilisiert, dass die Hebevorrichtungen im Wesentlichen unabhängig von der Ausrichtung der einzelnen Lastaufnahmemittel der jeweiligen Hebevorrichtung in Eingriff gebracht werden können mit den angeordneten Aussparungen.

Der Erfindung liegt die Überlegung zugrunde, ein flexibles System vorzuschlagen zur Handhabung von Bauteilen, wobei dafür erfindungswesentlich zwei Hebevorrichtungen vorgesehen sind, welche eine ferneinstellbare Verbindung zwischen der Hebevorrichtung und dem Bauteil ermöglicht. Insbesondere für die Ferneinstellbarkeit kann zunächst vorgesehen sein, dass die Lastaufnahmemittel im Wesentlichen liegend ausgerichtet sind, beispielsweise in Ausführung eines Zapfens, eines Dorns, eines Bolzens, eines Stifts oder dergleichen, was vorteilhaft ist für einen Eingriff in eine Aussparung an der Tangentialfläche, nämlich einen seitlichen Eingriff in ein Bauteil. Zur Handhabung können Zapfen oder Ähnliches aus der Ferne in die Aussparungen eingeführt und ein Bauteil angehoben werden, in der Art, dass die Last einem Lastaufnahmemittel aufliegt und darüber Last in die Hebevorrichtung eingeleitet wird. Es ist somit nicht erforderlich, dass das Personal die Lastaufnahmemittel oder die Anhängemittel unmittelbar ergreift.

Die Richtung, in die sich ein liegend ausgerichtetes Lastaufnahmemittel der Länge nach erstreckt, insbesondere ein Zapfen oder Ähnliches, wird vorliegend durch die jeweilige Längsachse definiert. In einer Ausgestaltung kann besonders bevorzugt vorgesehen sein, dass die Längsachsen zweier Lastaufnahmemittel winkelig zueinander ausgerichtet sind, wobei der betreffende Winkel vorliegend als Öffnungswinkel bezeichnet wird. Überraschenderweise hat sich gezeigt, dass ein Öffnungswinkel zwischen 25 ° und 95 °, insbesondere zwischen 30 ° und 90 °, und eine dazu korrespondierende Anordnung der Aussparungen es ermöglichen kann, sämtliche Teilstücke und Ringsegmente eines Turms mit den vorschlagsgemäßen Hebevorrichtungen handhaben zu können.

Dazu das folgende Beispiel: ein Ringsegment wird durch drei mittels Schraubverbindung miteinander verbundene Teilstücke gebildet, wobei jedes Teilstück zwei Aussparungen aufweist. Ausgangspunkt für das vorliegende Beispiel ist eine besonders bevorzugte Hubvorrichtung zum Heben eines Ringsegments, welche eine sichere und beschädigungsarme Handhabung eines Ringsegments gewährleisten kann und dabei wirtschaftlich vorteilhaft konstruierbar ist. Für diese Hubvorrichtung kann vorzugsweise eine kreuzartige Ausgestaltung vorgesehen sein, welche vier Lastaufnahmemittel aufweist, die jeweils in einem Öffnungswinkel von 90 ° zueinander ausgerichtet sind. Zum Heben des Ringsegments werden zwei Lastaufnahmemittel mit Aussparungen des ersten Teilstücks in Eingriff gebracht, und zwar eben unter einem Öffnungswinkel von 90 °. Die Aussparungen des ersten Teilstücks sind vergleichsweise weit voneinander beabstandet und nahe zu den Radialflächen angeordnet. Im Gegensatz dazu können die zwei weiteren Lastaufnahmemittel der Hubvorrichtung nur mit jeweils einer Aussparung des zweiten beziehungsweise des dritten Teilstücks in Eingriff gebracht werden, wobei diese Aussparungen mit einem vergleichsweise großen Abstand zu den Radialflächen angeordnet sind. Untersuchungen haben gezeigt, dass mittels einer kreuzartigen Hubvorrichtung eine sichere und beschädigungsarme Handhabung gewährleistet werden kann, obschon nicht jedes Teilstück des Ringsegments mit jeweils zwei Lastaufnahmemitteln in Eingriff steht. Zum Halten des ersten Teilstücks mittels Haltevorrichtung werden zwei Lastaufnahmemittel, wie zuvor, unter einem Öffnungswinkel von 90 ° mit den Aussparungen in Eingriff gebracht. Die zum Halten erforderlichen jeweils zweiten Aussparungen des zweiten und des dritten Teilstücks sind mit einem vergleichsweise jeweils geringen Abstand zueinander angeordnet, wobei der Öffnungswinkel nunmehr 30 ° beträgt, welcher eine lagestabilisierte Handhabung der Teilstücke mittels Haltevorrichtung gewährleistet.

Vorteilhaft kann vorgesehen sein, dass sich die Aussparungen innerhalb der Wand eines Bauteils im Wesentlichen radial, korrespondierend zu den Lastaufnahmemitteln erstrecken, was beispielsweise bedingen kann, dass die Tiefe der Aussparung, mit der eine Aussparung in die Wand eines Teilstücks hineinragt, vorzugsweise größer ausgestaltet ist als die Breite oder die Höhe der Aussparung.

Wie zuvor angedeutet, können in einer Ausgestaltung der Erfindung die Lastaufnahmemittel als Zapfen ausgestaltet sein, welche einen gebundenen und einen freiliegenden Abschnitt aufweisen und im Wesentlichen liegend ausgerichtet sind. Nur der freiliegende Abschnitt steht für einen Eingriff zur Verfügung. Der gebundene Abschnitt dient insbesondere dazu, den Zapfen zu halten und somit an die Hebevorrichtung lastübertragungswirksam anzubinden. Eine Aussparung kann beispielsweise als Mulde, Ausnehmung, Tasche oder dergleichen einen Hohlraum formend ausgestaltet sein, welche im Wesentlichen umfasst sind von der Wand des Teilstücks, wobei stets eine zugängliche Öffnung für den Eingriff vorhanden ist. Vorzugsweise können die Aussparungen eine im Wesentlichen quaderförmigen Hohlraumgeometrie aufweisen, wobei die Eingriffstiefe begrenzt wird durch die Länge eines Lastaufnahmemittels, wie dem freiliegenden Abschnitt eines Zapfens, durch die Tiefe der Aussparung und durch die Wandstärke eines Bauteils.

Vorteilhaft kann der Zapfen auf der Oberseite, das heißt auf der während der Handhabung lastübertragenden Seite eines Zapfens, abgeflacht sein, wodurch beispielsweise die Auflagefläche vergrößert und eine punktuelle Belastung herabgesetzt werden kann, zum Vorteil einer insgesamt höheren Belastbarkeit, und zwar sowohl die Belastbarkeit eines Zapfens als auch die des Betonwerkstoffs oder dergleichen, welcher die Aussparung umgebend angeordnet ist.

Im Bereich der Aussparungen können Ertüchtigungen vorgesehen sein, um einen beschädigungsfreien Lastabtrag verwirklichen zu können. Beispielsweise können Metalleinlagen, vorzugsweise besonders druckfeste Einlagen, in die Aussparungen eingeschoben werden. Alternativ oder zusätzlich kann im Bereich einer Aussparung insbesondere lokal ein besonders druckfester Betonwerkstoff vorgesehen sein, welcher bereits bei der Herstellung der Teilstücke eingebracht wird. Ebenso kann vorgesehen sein, die zuvor beschriebenen Einlagen bereits bei der Herstellung der Teilstücke während des Gießens einzubinden, so dass nach dem Abbinden des Betons eine form- und kraftschlüssige Verbindung ausgebildet ist zwischen dem Beton und der Einlage.

Wie zuvor beschrieben, kann die vorschlagsgemäße Haltevorrichtung ein Teilstück während der Entnahme aus einer Gießform halten. In einer vorteilhaften Weiterentwicklung kann das Handhabungssystem eine Gießform mit mehreren Seitenwänden und einem Boden aufweisen. Wünschenswert ist ein beschleunigter Arbeitsablauf, welcher beispielsweise dadurch erzielt werden kann, dass eine Gießform nicht zerlegt werden muss, um ein abgebundenes Teilstück entnehmen zu können. Dafür kann in einer Seitenwand eine Zugriffsöffnung vorgesehen sein, die wahlweise öffnenbar ist, so dass nach dem Abbinden ein Bereich einer Tangentialwand des Teilstücks von außen zugänglich ist, ohne die Gießform zerlegen zu müssen. Die Zugriffsöffnung kann beispielsweise unter Zuhilfenahme einer Tür oder Ähnliches wahlweise verschließbar sein, wobei die Tür in einer Schließstellung vorteilhaft mit einer Sicherungseinrichtung sicherbar ist, vorzugsweise ein Riegel oder Ähnliches, um ein unbeabsichtigtes Öffnen der Tür vor dem Abbinden des Betonwerkstoffs verhindern zu können. Wesentlich ist, dass die Zugriffsöffnung mit dem oberen Rand der Gießform verbunden ist, so dass der freiliegende Bereich für den Eingriff der Haltevorrichtung mit den Aussparungen genutzt werden kann, um das Teilstück aus der Gießform heben zu können. Besonders vorteilhaft kann die Seitenwand mehrere wahlweise verschließbare Zugriffsöffnungen aufweisen, welche jeweils einen freiliegenden Bereich der Tangentialfläche schaffen, welche im Wesentlichen jeweils die Anordnung der Aussparungen umfassen.

Seitenwände und Boden der Gießform begrenzen einen Schalungsraum, welcher der jeweiligen Form eines Teilstücks entspricht. Besonders vorteilhaft können die jeweils für den Eingriff der Lastaufnahmemittel notwendigen Aussparungen bereits bei der Herstellung der Teilstücke berücksichtigt werden, indem vorgesehen sein kann, in den Schalungsraum Einsätze anzuordnen, wie beispielsweise Verdrängungskörper, Einlagen oder dergleichen, welche der Geometrie der vorgesehenen Aussparungen entsprechen, um so beim Gießen des Betonwerkstoffs die Volumina der Einsätze freizuhalten. Dadurch, dass die Einsätze einer Seitenwand anliegen, können im Ergebnis nach dem Abbinden Aussparungen erzeugt werden, welche nach Entfernung der Einsätze ein von außen für die Lastaufnahmemittel zugängliches Volumen schaffen. Diese Art der Herstellung der Aussparung hat den Vorteil, dass Aussparungen mit hoher geometrischer Präzision und Reproduzierbarkeit gefertigt werden können. Zudem ist gewährleistet, dass die Aussparungen im Sinne einer Standardisierung an definierten Positionen angeordnet werden und dass die erforderlichen Arbeiten vor Ort auf der Baustelle, betreffend exemplarisch die Einbringung beziehungsweise die Bereitstellung von Ankern oder Ähnliches, vollständig durch die Vorfertigung der Aussparungen ersetzt werden.

Dem vorgeschlagenen Handhabungssystem liegt die Überlegung zugrunde, Maßnahmen vorzuschlagen, die es erlauben, unter anderem auf eine arbeitsintensive und risikobehaftete (De-)Montage von Ankern verzichten zu können. In einer Ausgestaltung kann die Haltevorrichtung Zapfen aufweisen, welche in einer Gebrauchsstellung mit Aussparungen eines Teilstücks in Eingriff gebracht werden beziehungsweise in die Aussparungen eingeführt werden, insbesondere mit den aus einer Zapfenaufnahme hervorstehenden, freien Enden der Zapfen, wobei der Eingriff an einer Tangentialfläche des Teilstücks erfolgt, und zwar vorzugsweise an der inneren Tangentialfläche.

Infolgedessen kann das Personal ein Teilstück in einfacher Weise halten und damit ferneinstellbar handhaben, ohne beim Anhängen des Teilstücks an exponierter Position agieren zu müssen, so dass beispielsweise das Risiko, von einer Leiter herabzustürzen, ausgeschlossen wird.

Vorteilhafterweise können Aussparungen oder dergleichen bereits bei der Herstellung eines Teilstücks in die Tangentialfläche eines Teilstücks eingebracht werden. Alternativ kann eine Aussparung als Durchgangsöffnung oder Ähnliches ausgestaltet sein, welche die innere mit der äußeren Tangentialfläche des Teilstücks durchgreifbar verbindet.

Vorzugsweise kann eine Durchgangsöffnung als Bohrung ausgestaltet sein, welche auf einfache Weise auch jederzeit eingebracht werden kann.

Eine Zapfenaufnahme kann ein den Zapfen zumindest abschnittsweise umfassendes Gehäuse oder Ähnliches der Haltevorrichtung betreffen. Ebenso kann die Zapfenaufnahme im Sinne des vorliegenden Vorschlags als Anbindung ausgestaltet sein, welche einen Zapfen mit einer Halteklaue kraftübertragungswirksam verbindet.

Als besonders bevorzugtes Gestaltungsmerkmal kann die Haltevorrichtung eine Kippsicherung aufweisen, die dazu bestimmt ist, ein sicheres Handhaben eines Teilstücks zu gewährleisten, solange das Teilstück auf den Zapfen lastend gehalten ist. Dazu wirkt die Kippsicherung in Art einer Haltesicherung gegen eine den Zapfeneingriff möglicherweise lösenden Kippbewegung um eine durch die Zapfen verlaufende Kippachse. Auch einer möglichen Gleitbewegung eines auf den Zapfen lastenden Teilstücks wirkt die Kippsicherung entgegen.

Als Maßnahme gegen die ungewollte Bewegung kann ein Kippanschlag vorgesehen sein, welcher einem Teilstück anliegend angeordnet ist, wodurch das Teilstück lagestabilisiert gehalten und somit handhabbar ist. Im Zuge dessen kann erstens das Gefährdungspotential für das Personal verringert werden. Zweitens kann die Handhabung bzw. die Ausrichtung eines hängenden Teilstücks präzisiert werden, was insbesondere für die Montage der Teilstücke zu Ringsegmenten von Vorteil ist. Drittens kann durch die Kippsicherung die Anordnung der Aussparungen in der Tangentialfläche eines Teilstücks, insbesondere der tangentiale Abstand der Aussparungen voneinander, grundsätzlich unabhängig wählbar sein von einer bestimmten Schwerpunktlage eines gehaltenen Teilstücks. Infolgedessen wird der Arbeitsaufwand für die Einbringung der Aussparungen in das Teilstück verringert und das Fehlerrisiko minimiert.

Für die Haltevorrichtung können im Hinblick auf die Art und/oder Anzahl ein oder mehrere Kippanschläge vorgesehen sein. In einer Ausgestaltung kann der Kippanschlag in Art eines Flächenanschlags einer Tangentialfläche des Teilstücks anliegend ausgestaltet sein, und zwar vorzugweise der äußeren Tangentialfläche, so dass in Gebrauchsstellung ein Teilstück zwischen den Halteklauen und dem Flächenanschlag angeordnet ist. Insbesondere eine Anordnung des Flächenanschlags oberhalb der Zapfen, kann einer Kippbewegung der Oberkante in Richtung zur äußeren Tangentialfläche entgegenwirken. Das Risiko einer derartig gerichteten Kippbewegung ist umso stärker ausgeprägt, je weiter die äußersten Aussparungen in einem Teilstück voneinander beabstandet sind, das heißt diejenigen Aussparungen, welche den beiden Radialflächen am nächsten sind.

In einer Ausgestaltung kann ein weiterer Flächenanschlag vorgesehen sein, welcher bevorzugt der inneren Tangentialfläche des Teilstücks anliegend ausgestaltet sein. Innerer und äußerer Flächenanschlag können ein Teilstück in Gebrauchsstellung in Art einer Klemmung fixieren zur sicheren Handhabung des Teilstücks.

Weiterhin kann alternativ oder zusätzlich ein Kippanschlag in Art eines Kantenanschlags vorgesehen sein, welcher in der Art angeordnet ist, dass dieser in Gebrauchsstellung einem Teilstück auf der Oberkante anliegt. Der Kantenanschlag kann einer Kippbewegung der Oberkante in Richtung zur inneren Tangentialfläche entgegenwirken, wobei diese Kippbewegung umso stärker ausgeprägt ist, je weniger die äußersten Aussparungen in einem Teilstück voneinander beabstandet sind.

In einer Ausgestaltung können die Halteklauen ein oder mehrere Tiefenanschläge aufweisen, welche der Oberkante eines Teilstücks in Gebrauchsstellung aufliegen. Mittels Tiefenanschlag kann auf einfache Weise die für den Eingriff der Zapfen in die jeweilige Aussparung passende Anordnung der Haltevorrichtung zum Teilstück erzielt werden, so dass der Anhängevorgang vereinfacht und beschleunigt werden kann, wobei zudem das Risiko von Verletzungen des Personals und von Beschädigungen des Teilstücks minimiert wird.

In einer Ausgestaltung kann auch die Hubvorrichtung Zapfen aufweisen, welche jeweils ein freies Ende aufweisen und welche sich in divergierende Richtungen erstrecken. Die freien Enden können besonders bevorzugt die äußeren Punkte eines Traggestells bilden, um mittels der vorschlagsgemäßen Hubvorrichtung in Hubstellung ein Ringsegment heben zu können, welches im Wesentlichen zirkumferent um die Hubvorrichtung angeordnet ist. Mit anderen Worten ist die Hubvorrichtung in Hubstellung im Innenraum des Ringsegments angeordnet. Die freien Enden sind dazu bestimmt, mit Aussparungen in einem Ringsegment in Eingriff gebracht zu werden beziehungsweise in die Aussparungen eingeführt zu werden, wobei der Eingriff an der inneren Tangentialfläche des Ringsegments erfolgt.

Die Zapfen können in so bezeichneten Zapfenaufnahmen gehalten werden und können darüber mit der Hubvorrichtung verbunden sein, wobei die Zapfenaufnahme in oder an einem Arm des Traggestells angeordnet sind, so dass das Traggestell für jeden Zapfen jeweils einen Arm aufweist.

Insbesondere einem weitgehenden Schutz des Personals zuträglich ist vorschlagsgemäß vorgesehen, dass die Zapfen in der Art fernverstellbar sind, dass der Abstand zwischen den freien Enden veränderlich ist, wobei die Fernverstellbarkeit vorzugsweise kraftunterstützt erfolgen kann. Ein längsbeweglich gelagerter Zapfen und/oder eine Beweglichkeit beziehungsweise Faltbarkeit des Traggestells können vorgesehen sein, um eine Abstandsänderung zwischen den freien Enden bewirken zu können. Durch die Fernverstellbarkeit werden Verletzungsrisiken für das Personal, beispielsweise Quetschungen der Hände oder dergleichen herabgesetzt.

Vorteilhaft kann ein Zapfen auf der Oberseite, das heißt auf der während der Handhabung lastübertragenden Seite eines Zapfens, abgeflacht sein, wodurch beispielsweise die Auflagefläche vergrößert und eine punktuelle Belastung herabgesetzt werden kann, zum Vorteil einer insgesamt höheren Belastbarkeit, und zwar sowohl die Belastbarkeit eines Zapfens als auch die des Betonwerkstoffs oder dergleichen, welcher die Aussparung umgebend angeordnet ist.

Um Ringsegmente divergierender Durchmesser handhaben zu können, können für die Hubvorrichtung ein oder mehrere teleskopierbare Arme vorgesehen sein, so dass das Traggestell in Armrichtung wahlweise verlängerbar ist, und zwar bevorzugt auf eine Länge im Wesentlichen entsprechend dem Durchmesser eines zu hebenden Ringsegments. Eine Verwendung unterschiedlicher Traggestellgrößen wird dadurch unnötig, mit der Folge, dass Arbeitsabläufe wirtschaftlich vorteilhaft vereinfacht werden können. Zudem können die teleskopierbaren Arme vorteilhaft dafür verwendet werden, um in der Zapfenaufnahme feststehende Zapfen in Eingriff zu bringen mit den Aussparungen. Das Ausfahren der Arme kann über zwei oder mehr Teleskopschüsse und vorzugsweise kraftunterstützt erfolgen, beispielsweise mittels motorischem, elektrischem, pneumatischem und/oder hydraulischem Antrieb.

Über die Wirkung des Auseinanderfahrens hinausgehend kann im Besonderen vorgesehen sein, dass die Hubvorrichtung unter anderem dazu geeignet ist, im Sinne einer Spreizung eine Druckkraft beispielsweise auf die innere Tangentialwand eines Ringsegments zu übertragen. Dies kann bei der Positionierung von Ringsegmenten von Bedeutung sein, wenn exemplarisch zwei Ringsegmente aufeinandergesetzt werden und zwar entweder auf dem Montageplatz oder zur Errichtung des Turmbauwerks.

In einer Ausgestaltung kann das System ferner einen Montagestern umfassen, welcher zur Lagerung der Bauteile bestimmt ist. Der Montagestern kann mehrere Stützschienen aufweisen, vorzugsweise sechs, welche sich von einem gemeinsamen Anschlusselement strahlenförmig erstrecken, wobei die Stützschienen an das Anschlusselement im Sinne einer vereinfachten Transportlogistik vorzugsweise gelenkartig um eine aufrechte Gelenkachse schwenkbar angeschlossen sein können. Vorteilhafterweise können jeweils zwei Stützschienen miteinander fluchtend angeordnet sein, so dass die Erstreckungslänge bis ca. 15 m beträgt. Es kann vorgesehen sein, dass die Stützschienen teleskopierbar ausgestaltet sind, derart, dass diese axial wahlweise verlängerbar sind. In einer Ausgestaltung liegen die Lagerschlitten den Stützschienen wahlweise verschiebbar auf, und zwar so, dass die Lagerschlitten auf einer gemeinsamen Kreisbahn mit einem Durchmesser bis ca. 16 m anordnenbar sind.

In einer Weiterentwicklung kann das System eine Montagebühne aufweisen, welche zur stationären Anordnung auf einem Montageplatz im Innenraum eines Ringsegments bestimmt ist. Die vorgesehene Montagebühne kann eine von der Bodenoberfläche beabstandete Arbeitsplattform aufweisen mit einer für das Personal begehbaren Trittfläche und mit einer Absturzsicherung, wobei die gekrümmten Teilstücke zur Montage um die Montagebühne herum angeordnet werden. Dadurch wird dem Personal die Möglichkeit eröffnet, in einer bestimmten Arbeitshöhe sicher und schnell allseits agieren zu können, um beispielsweise ein Teilstück präzise auszurichten oder Installationen oder dergleichen im Innern eines Ringsegments sicher vorzunehmen.

Der Aktionsraum, innerhalb dessen sich das Personal auf der Montagebühne bewegen kann, wird arbeitsplattformseitig durch die Trittfläche in Verbindung mit der Absturzsicherung begrenzt und kann damit wesentlich erweitert werden gegenüber dem Aktionsraum auf einer Leiter, welcher im Wesentlichen auf eine Leitertrittstufe reduziert ist. Die Absturzsicherung kann derart ausgestaltet sein, dass diese oberhalb der Trittfläche, vorzugsweise in einer Höhe von 1100 mm, und dem Grundriss der Trittfläche zumindest abschnittsweise folgend angeordnet ist.

Vorteilhaft kann die Montagebühne unterhalb der Arbeitsplattform eine Drehlagerung aufweisen, so dass die Arbeitsplattform drehbar ist um eine aufrechte Mittelachse, vorzugsweise um 360 °, wobei die Mittelachse im Wesentlichen im Mittelpunkt der Arbeitsplattform angeordnet sein kann. Insbesondere bei einer Arbeitsplattform mit einem im Wesentlichen rechteckigen Grundriss ermöglicht die Drehbarkeit, dass das Personal alle Bereiche der gekrümmten Teilstücke beziehungsweise des Ringsegments umfangsmäßig erreichen kann, ohne dafür beispielsweise die Montagebühne zuvor umsetzen zu müssen oder dergleichen.

In einer besonders bevorzugten Ausgestaltung kann die Montagebühne unterhalb der Arbeitsplattform eine Hubeinrichtung aufweisen, insbesondere einen Scherenhub. Das Personal erhält damit die Möglichkeit, in einer ergonomischen Arbeitsumgebung agieren zu können, da es nicht mehr erforderlich ist, Leitern verwenden zu müssen, um in unterschiedlichen Höhen arbeiten zu können. Des Weiteren kann auf dem Montageplatz auf einem ersten, unteren Ringsegment ein zweites Ringsegment montiert werden. Dafür kann die Arbeitsplattform in eine Höhe von beispielsweise bis zu 8 m und mehr über die Bodenoberfläche gehoben werden.

Indem zwei Ringsegmente übereinander lagernd montiert werden, können Installationen im Inneren schneller erfolgen, da beispielsweise ein mehrere Ringsegmente übergreifendes Bauteil, wie eine Leiter und Ähnliches, mit einer höheren Vorfertigung montiert werden kann. Nachträgliche Installationsarbeiten im Innern des Turmbauwerks werden wirtschaftlich vorteilhaft verringert.

Vorteilhafterweise kann vorgesehen sein, die Aussparungen in einem Ringsegment während der Errichtung eines Turms zu nutzen für eine Spannanordnung in Art einer Zwischenabspannung. Dazu kann vorgesehen sein, Spannelemente bereits während der Turmerrichtung anzuordnen, und zwar noch bevor sämtliche für die Errichtung des Turms vorgesehenen Ringsegmente verbaut wurden, um dadurch eine Stabilisierung des Turms während der Bauzeit zu bewirken. Die Spannanordnung kann vorteilhaft mehrere Spannelemente umfassen, wie beispielsweise ein Ringsegment, Haltemittel, Spannglieder, Spannmittel und Zuganker.

Haltemittel können dafür in die Aussparungen eines Ringsegments eingeschoben werden, wobei das betreffende Ringsegment in einer Höhe zwischen 50 und 90 m als Teil des Turms angeordnet ist. An den Haltemitteln angeschlossen sind Spannseile, die sich bis zu der Bodenoberfläche erstrecken und vorzugsweise über einen Hydraulikzylinder mit dem Turmfundament verbunden sind. Mittels Hydraulikzylinder werden die Spannglieder, vorzugsweise Stahlseile, jeweils gespannt. Weitere Ringsegmente können nun auf das Ringsegment der Zwischenabspannung gehoben werden. Vorteilhaftweise erfolgt eine Entspannung erst nach Fertigstellung eines Turms beziehungsweise nach der Errichtung des Turms, welche eine Vorspannung sämtlicher Ringsegmente mittels Spannlitzen beinhaltet.

Die Erfindung schlägt ferner ein Handhabungsverfahren nach Anspruch 8 vor, wobei Teilstücke positioniert, zu einem Ringsegment montiert und schließen gehoben werden zur Errichtung eines Turms. Mit anderen Worten wird vorgeschlagen, dass dabei die Bauteile jeweils über die Tangentialfläche in Eingriff gebracht werden mit den weitestgehend gleichen Lastaufnahmemitteln einer Haltevorrichtung beziehungsweise einer Hubvorrichtung. Besonders bevorzugt kann vorgesehen sein, das vorgeschlagene Verfahren unter Verwirklichung des Handhabungssystems mit einer beliebigen Kombination der zuvor beschriebenen Gestaltungsmerkmale umzusetzen.

In einem ersten Schritt werden mehrere Teilstücke nacheinander auf einem Untergrund positioniert. Der dafür erforderliche Untergrund ist entsprechend eben auszugestalten und sollte eine ausreichende Tragfähigkeit für die hohen Gewichte der Teilstücke aufweisen. Die Teilstücke werden ringförmig zueinander angeordnet und einander angenähert bis die Radialflächen einander anliegen. Das Positionieren der einzelnen Teilstücke erfolgt jeweils unter Zuhilfenahme einer Haltevorrichtung, welche Lastaufnahmemittel aufweist, die mit den Aussparungen an der Tangentialfläche jeweils eines Teilstücks in Eingriff gebracht werden. Zwischen den Teilstücken kann insbesondere eine form- und kraftschlüssige Verbindung in Art einer Verschraubung vorgesehen sein, welche die Teilstücke, vorzugsweise drei an der Zahl, zu einem quasi monolithisch handhabbaren Objekt in Gestalt eines Ringsegments verbindet.

Weitere Montagearbeiten können vorgesehen sein, um beispielsweise Leitern, Plattformen, Versorgungseinrichtungen und Ähnliches an der inneren Tangentialfläche des Ringsegments zu installieren. Insbesondere die Montagearbeiten können seitens des Personals besonders vorteilhaft unter Verwendung einer Montagebühne mit den zuvor beschriebenen Merkmalen erfolgen, durch welche eine Arbeitsplattform für das betreuende Personal bereitgestellt werden kann und welche im Innenraum des Ringsegments angeordnet ist.

Mittels einer als Hubvorrichtung bezeichneten Hebevorrichtung wird das gebildete Ringsegment vorschlagsgemäß gehoben und zwar insbesondere auf die erforderliche Höhe zur Errichtung des Turms. Dazu werden die Lastaufnahmemittel der Hubvorrichtung in Eingriff gebracht mit den Aussparungen des Ringsegments, wobei für die Hubvorrichtung auf dieselben Aussparungen zurückgegriffen wird, die zuvor für die Haltevorrichtung genutzt wurden.

Wie zuvor dargestellt, handelt es sich bei den gekrümmten Teilstücken überwiegend um Betongussteile, welche in vorgefertigten Gießformen hergestellt werden. In einer vorteilhaften Ausgestaltung des Verfahrens kann daher vorgesehen sein, dass ein Teilstück zunächst mittels der Haltevorrichtung aus einer Gießform entnommen wird, wobei ebenfalls zum Halten ein Eingriff der Lastaufnahmemittel in die Aussparungen des Teilstücks erfolgt, welche im weiteren Verfahrensablauf beispielsweise zum Positionieren und zum Heben verwendet werden. Weiterhin kann vorgesehen sein, die Teilstücke mittels Haltevorrichtung auf einem Betonfertigteillager oder dergleichen zu verbringen.

Im Anschluss an eine Entnahme eines Teilstücks aus einer Gießform kann in einem weiteren Verfahrensschritt ein Transportfahrzeug, insbesondere ein Lastkraftwagen oder Ähnliches, mit einem oder mehreren Teilstücken beladen und nach dem Transport wiederum entladen werden. Zum Halten der Teilstücke während sämtlicher Ladearbeiten kann auf die Haltevorrichtung zurückgegriffen werden.

Insbesondere für eine kostenminimierende Handhabung der Bauteile kann in einer besonders bevorzugten Weiterentwicklung des Verfahrens ein so genannter Tandemhub vorgesehen sein, bei dem ein oberes Ringsegment einem unterem Ringsegment aufliegt und die beiden Ringsegmente gleichzeitig unter Zuhilfenahme einer Hubvorrichtung auf die erforderliche Höhe gehoben werden können. Wesentlich ist, dass beim Tandemhub zwei Ringsegmente gehoben werden, welche zur Errichtung des Turms übereinander anzuordnen sind, wobei die Hubvorrichtung lediglich mit dem unteren Ringsegment, beziehungsweise mit den Aussparungen des unteren Ringsegments, in Eingriff gebracht wird und das obere Ringsegment während des Hubvorgangs von dem unteren Ringsegment gehalten wird. Die Unterkante des oberen Ringsegments liegt der Oberkante des unteren Ringsegments auf, wobei vorgesehen sein kann, zwischen Ober- und Unterkante insbesondere eine stoffschlüssige Verbindung einzufügen, beispielsweise eine Klebverbindung oder Ähnliches. Eine derartige Verbindung kann nicht nur die Standsicherheit des Turms erhöhen, und zwar insbesondere während der Bauphase, sondern kann auch zu einer sicheren Lagerung des oberen Ringsegments auf dem unteren Ringsegment während des Hubvorgangs beitragen.

Zur übereinander angeordneten Lagerung zweier Ringsegmente kann in einer Ausgestaltung vorgesehen sein, dass ein erstes Ringsegment zunächst aus mehreren Teilstücken montiert wird, wie zuvor beschrieben. Anschließend können vorteilhaft weitere Teilstück auf dem bereits montierten, ersten Ringsegment mittels Haltevorrichtung positioniert und miteinander verbunden werden zur Bildung eines zweiten Ringsegments, wobei die Oberkante des unteren Ringsegments der Unterkante des darüber angeordneten zweiten Ringsegments aufliegt. Vorteilhaft kann bereits beim Positionieren eine Klebverbindung oder Ähnliches hergestellt werden zwischen dem ersten Ringsegment und den weiteren, aufstehenden Teilstücken.

Insbesondere ein Montageplatz mit einem hinreichenden Platzangebot und/oder der Möglichkeit zur Nutzung mehrerer Krane oder dergleichen kann in einer alternativen Ausgestaltung für eine übereinander angeordnete Lagerung zweier Ringsegmente vorgesehen sein, zunächst zwei Ringsegmente unabhängig voneinander zu montieren, jeweils unter Zuhilfenahme einer Haltevorrichtung, und anschließend ein zweites Ringsegment dem ersten Ringsegment mittels Hubvorrichtung aufzulegen. Alsdann können beide Ringsegmente in Art eines Tandemhubs auf die erforderliche Höhe gehoben werden oder auf einem vorbereiteten Turmfundament abgesetzt werden, gegebenenfalls nachdem weitere Installationsarbeiten im Innern der Ringsegmente umgesetzt wurden, beispielsweise die Montage von Leitern, Versorgungssystemen und Ähnliches.

Sowohl bei der Positionierung von Teilsegmenten als auch bei der Anordnung eines Ringsegments auf einem darunter angeordneten Ringsegments kann eine Hubvorrichtung genutzt werden zur Ausrichtung der Bauteile zueinander, um beispielsweise allgemeine Anforderungen an Spaltmaße oder dergleichen erfüllen zu können. Nachdem die Hubvorrichtung in Eingriff gebracht wurde mit Aussparungen in der Tangentialwand der Bauteile, können ausgehend von der Hubvorrichtung besonders vorteilhaft Druckkräfte in die Bauteile eingeleitet und diese dadurch bewegt werden, bis diese entsprechend ausgerichtet wurden, damit beispielsweise die Unterkante eines oberen Ringsegments der Oberkante eines unteren Ringsegments versatzfrei aufliegt.

Die Montage der Teilstücke zu einem Ringsegment kann vorteilhaft unter Verwendung eines Montagesterns erfolgen, welcher an dem Montageplatz auf einem Untergrund lagernd angeordnet wird. Der Montagestern dient dazu, definiert ausgerichtete Auflagepunkte bereitzustellen, auf welche die Teilstücke positioniert werden. Die Verwendung eines Montagesterns kann mit einer wesentlichen Beschleunigung von Arbeitsabläufen einhergehen, da vorzugsweise jegliches Ringsegments eines Turms auf dem Montagstern lagerbar ist, das heißt alle vorgesehenen Durchmesser. Es ist somit nicht notwendig, für die Arbeitsvorbereitung zunächst einen großdimensionierten Montageplatz zu schaffen, welcher für alle vorgesehenen Ringdurchmesser einen ausreichend tragfähigen Untergrund bereitstellt. Stattdessen ist es ausreichend, lediglich für die Lagerung des Montagesterns einzelne, ausreichend tragfähige Lagerpunkte zu berücksichtigen, so dass im Ergebnis die Handhabung der Bauteile vereinfacht wird.

Zur Stabilisierung des Turms werden die Teilstücke übereinander angeordneter Ringsegmente in Umfangsrichtung vorzugsweise derart versetzt zueinander ausgerichtet, dass ein Verbund geschaffen wird und Trennstellen zwischen den Teilstücken eines Ringsegments umfangmäßig versetzt verlaufen zu Trennstellen zwischen den Teilstücken eines benachbarten Ringsegments.

Ausführungsbeispiele der Erfindung werden anhand der rein schematischen Darstellungen nachfolgend näher erläutert, wobei einzelne Merkmale oder eine Kombination von Merkmalen der dargestellten Ausführungsbeispiele auch unabhängig von übrigen Ausgestaltungen bei einem vorschlagsgemäßen Handhabungssystem beziehungsweise bei einem Handhabungsverfahren verwirklicht sein können. Dabei zeigt
- Fig. 1: eine perspektivische Ansicht von schräg oben auf eine Haltevorrichtung in Gebrauchsstellung, haltend ein gekrümmtes Teilstück,
- Fig. 2: eine perspektivische Ansicht von schräg oben auf eine Montageanordnung eines Ringsegments auf einem Montageplatz, wobei ein gekrümmtes Teilstück bereits auf einem Montagestern positioniert ist, ein weiteres Teilstück mittels Haltevorrichtung aus Fig. 1 gehandhabt wird und ein drittes Teilstück noch nicht positioniert beziehungsweise gehandhabt wurde,
- Fig. 3: eine perspektivische Ansicht einer Hubvorrichtung von schräg oben,
- Fig. 4: eine Seitenansicht auf eine Montageanordnung mit einem Ausführungsbeispiel einer Hubvorrichtung, einer Montagebühne und einem Montagestern,
- Fig. 5: eine perspektivische Ansicht eines Ausschnitts einer Montageanordnung mit einer Montagebühne von schräg oben, und
- Fig. 6: eine perspektivische Ansicht auf eine Hubanordnung in Art eines Tandemhubs von schräg oben.

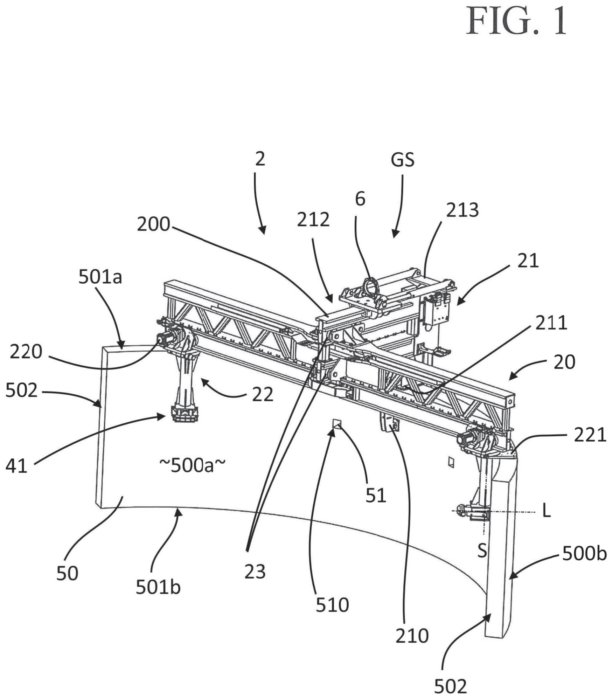

Fig.1 zeigt eine perspektivische Ansicht von schräg oben auf eine Haltevorrichtung 2 in Gebrauchsstellung GS haltend ein Teilstück 50 zu sehen. Das Teilstück 50 wird durch eine innere und eine äußere Tangentialfläche 500a, 500b, durch eine Oberkante 501a und eine Unterkante 501b sowie durch zwei Radialflächen 502 begrenzt.

In dem vorliegenden Ausführungsbeispiel weist die Haltevorrichtung 2 eine Traverse 20 und zwei entlang der Traverse 20 motorisch mittels Halteklauenantrieb 220 verfahrbar gelagerte Halteklauen 22 auf. Ein Querbalken 212 ist in einem rechten Winkel zur Traverse 20 ebenfalls verfahrbar gelagert. Der Querbalken 212 weist Doppelt-T-Träger 200 auf, welche jeweils beabstandet, übereinander angeordnet sind und welche unter anderem als Führungsschienen für den auf Laufrädern 23 gelagerten Querbalken 212 fungieren.

Exemplarisch ist die Anschlussvorrichtung, aufweisend eine Einhängeöse 6 als Anschlussmittel, entlang dem Querbalken 212 verschiebbar angeordnet. Eine verschiebbare Anschlussvorrichtung hat den Vorteil, dass der Kraftangriff des Hebezeugs eines Krans oder dergleichen optimal im Schwerpunkt der Haltevorrichtung 2 erfolgen kann, um für das Halten beziehungsweise die Handhabung eines Teilstücks 50 eine weitestgehende Lagestabilisierung gewährleisten zu können. Die translatorische Bewegung der Anschlussvorrichtung entlang der Querbalken 212 erfolgt mittels Arbeitszylinder 213, beispielsweise ein Hydraulik- oder Pneumatikzylinder. Erstens erfolgt somit die Positionierung der Anschlussvorrichtung kraftunterstützt, was insbesondere vorteilhaft ist, sofern eine Verschieben unter Last vorgesehen ist. Zweitens gewährleistet der Arbeitszylinder 213 eine Festlegung der Anschlussvorrichtung in einer bestimmten Position, was zu einer Lagestabilisierung eines zu handhabenden Teilstücks 50 beiträgt.

Anstelle von Ankern weist das gekrümmte Teilstück 50 an den inneren Tangentialflächen 500a Aussparungen 51 auf, welche in Art von annähernd quaderförmigen Taschen 510 ausgestaltet sind, in die die freien Enden 40 der Zapfen 4 der Haltevorrichtung 2 eingreifen und dadurch eine Handhabung des Teilstücks 50 ermöglichen. Die Zapfen 4 sind in einer Zapfenaufnahme 41 an der Halteklaue 22 angeordnet. Der Kantenanschlag 211 an der Kippsicherung 21 sowie die Tiefenanschläge 221 an den Halteklauen 22 liegen der Oberkante 501a des Teilstücks 50 an. Ein Flächenanschlag 210 liegt der inneren Tangentialfläche 500a an. Die Halteklauen 22 sind in der vorliegenden Gebrauchsstellung GS maximal voneinander beabstandet angeordnet. Um die Schenkachse S sind die Zapfen 4 jeweils derart geschwenkt, dass die freien Enden 40 der Zapfen 4 radial in Eingriff stehen mit den Taschen 510 in der inneren Tangentialfläche 500a des Teilstücks 50. Die Längsachsen L der Zapfen 4 begrenzen dabei einen Öffnungswinkel α von 90 ° (in der Zeichnung nicht dargestellt).

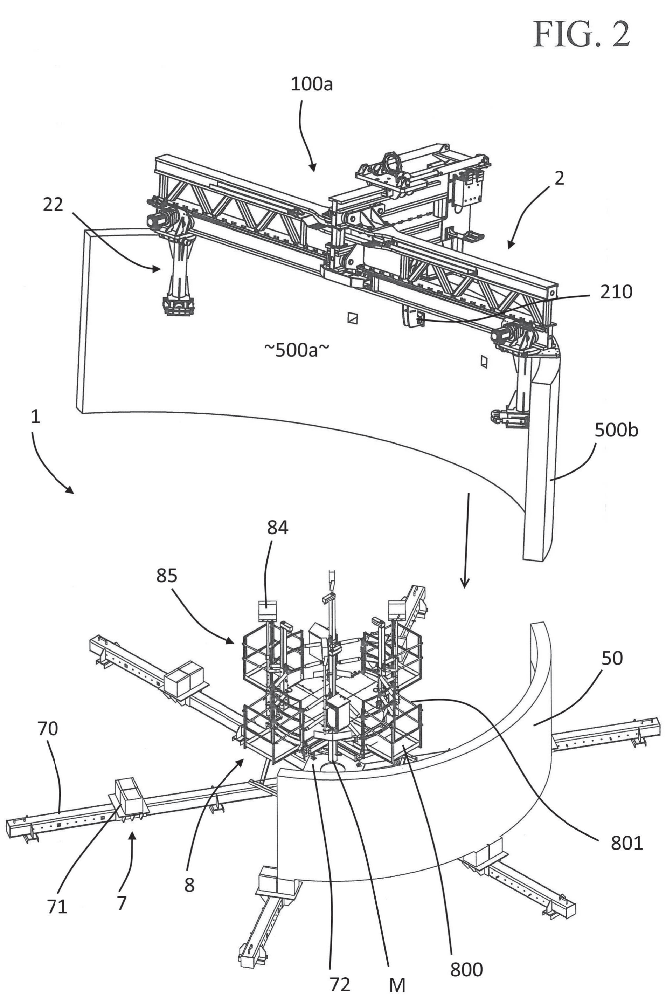

Eine perspektivische Ansicht von schräg oben auf eine Montageanordnung 100a eines Ringsegments 5 auf einem Montageplatz als Teil des Handhabungssystems 1 zeigt Fig. 2, aufweisend einen Montagestern 7, eine Montagebühne 8 und eine Haltevorrichtung 2.

Der Montagestern 7 weist mehrere Stützschienen 70 mit jeweils einem Lagerschlitten 71 auf, wobei sich die Stützschienen 70 von einem gemeinsamen Anschlusselement 72 strahlenförmig erstrecken. Für die Montage eines Ringsegments 5 ist eine präzise Positionierung der gekrümmten Teilstücke 50 erforderlich. Daher ist der Montagestern 7 auf einer Bodenoberfläche 9 aufstehend im Wesentlichen horizontal ausgerichtet.

Die Montagebühne 8 ist in Art einer Kreuzbühne 85 ausgestaltet und ist um eine Mittelachse M drehbar auf dem Montagestern 7 gelagert, und zwar um 360 ° drehbar, und weist teleskopierbare Trittflächen 800 und Absturzsicherungen 801 auf. In Verlängerung der Arbeitsplattform 80 können Podesterweiterungen 81 angeordnet sein, die in Fig. 2 aus Darstellungsgründen jedoch nicht eingezeichnet sind. Ferner ist eine Beleuchtungseinrichtung 84 mit entsprechender Energieversorgung zur Ausleuchtung der Arbeitsumgebung dargestellt.

Zu sehen ist weiterhin ein erstes gekrümmtes Teilstück 50, welches bereits auf dem Montagestern 7 positioniert ist, und zwar auf Lagerschlitten 71 lagernd. Ein zweites Teilstück 50 wird mittels der Haltevorrichtung 2 aus Fig. 1 gehandhabt, wobei aus Darstellungsgründen in Fig. 2 weder das Hebezeug noch ein Kran dargestellt sind. Das zur Montage eines Ringsegments 5 notwendige dritte Teilstück 50, wurde noch nicht positioniert.

Zur Positionierung eines Teilstücks 50 auf dem Montagestern 7 wird das Teilstücks 50 mittels Haltevorrichtung 2 gehoben und wird dem Montagestern 7 angenähert bis das Teilstück 50 auf die Lagerschlitten 71 abgesetzt werden kann. Dabei sind die Halteklauen 22 der Haltevorrichtung 2 in einem Raum zwischen der Montagebühne 8 und dem Teilstück 50 angeordnet. Im Anschluss an die exakte Positionierung werden die Flächenanschläge 210 von der inneren und äußeren Tangentialfläche 500a, b entfernt und der Eingriff der Zapfen 4 aus den Aussparungen 51 wird gelöst und die Halteklauen 22 aus dem Zwischenraum herausgehoben. Zur Montage des Ringsegments 5 werden die Teilstücke 50 miteinander verbunden und gegebenenfalls Leitern, Versorgungseinrichtungen oder dergleichen im Innenraum an der inneren Tangentialfläche 500a eines Ringsegments 5 installiert.

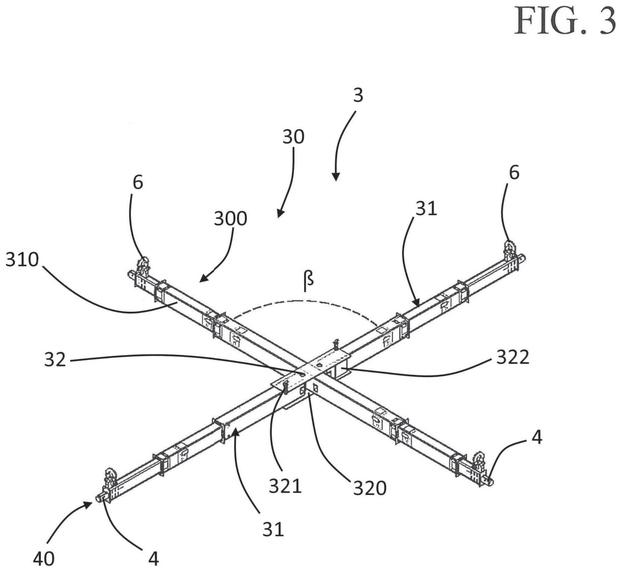

Eine perspektivische Ansicht eines Ausführungsbeispiels einer Hubvorrichtung 3 zeigt Fig. 3. Dargestellt ist eine Hubvorrichtung 3 mit einem Traggestell 30 in Art eines Kreuzgestells 300 aufweisend vier Arme 31, welche im rechten Winkel zueinander und ebengleich angeordnet sind. Jeder Arm 31 weist jeweils einen Zapfen 4 mit entsprechendem freien Ende 40 auf, welche die äußeren Punkte des Kreuzgestells 300 bilden. Jeweils zwei Zapfen 4 sind miteinander fluchtend angeordnet. Benachbart zu jedem Zapfen 4 und oberhalb dessen ist jeweils eine Einhängeöse 6 angeschlossen.

Weiterhin sind die Arme 31 teleskopierbar ausgestaltet. Jeweilige Teleskopschienen 310 ermöglichen eine wahlweise stufenlose Verlängerung in Armrichtung, so dass grundsätzlich Ringsegmente 5 unterschiedlicher Innendurchmesser mit demselben vorliegenden Ausführungsbeispiel einer Hubvorrichtung 3 gehandhabt werden können.

In Fig. 3 ist erkennbar, dass zwei miteinander fluchtende Arme 31 beabstandet und ebengleich zueinander angeordnet sind, wobei zwischen diesen Armen 31 weitere Arme 31 verlaufen. Eine Gelenkplatte 320 verbindet die beiden beabstandeten Arme 31, wobei jeder Arm 31 über ein von den weiteren Armen 31 beabstandetes Gelenk 32 mit der Gelenkplatte 320 verbunden ist. Zudem ist die Gelenkplatte 320 mit den weiteren Armen 31 fest verbunden. Die Schwenkbarkeit der Arme 31 minimiert den Transportraum, welcher für die Transportlogistik des vorliegenden Ausführungsbeispiels zu berücksichtigen ist. Die Arme 31 sind im Wesentlichen frei schwenkbar ausgestaltet, derart, dass zwischen den Armen 31 ein Armöffnungswinkel β zwischen 0 ° und 90 ° einstellbar ist. Arretierbolzen 321, welche sich wahlweise durch die Gelenkplatte 320 hindurch erstreckend ausgestaltet sind, sichern einen bestimmten Armöffnungswinkel β zur Handhabung eines Ringsegments 5. Der vorliegend maximale Armöffnungswinkel β von 90 ° wird begrenzt durch einen Seitenanschlag 322, welcher an der Gelenkplatte 320 angeordnet ist, in der Art, dass ein Arm 31 dem Seitenanschlag 322 anliegt, wenn ein Armöffnungswinkel β von 90 ° eingestellt ist.

Grundsätzlich sind die Arme 31 hinreichend knickfest bemessen, derart, dass beim Handhaben eines Ringsegments 5 ein Knickversagen eines Arms 31 ausgeschlossen ist, so dass sichergestellt ist, dass die Zapfen 4 während der Handhabung stets in Eingriff stehen mit einer jeweiligen Aussparung 51. Teleskopschienen 310 können beispielsweise ferner dazu geeignet sein, beim Auseinanderfahren Druckkräfte auf die innere Tangentialfläche 500a eines Ringsegments 5 auszuüben, wodurch Bauteile ausgerichtet werden können.

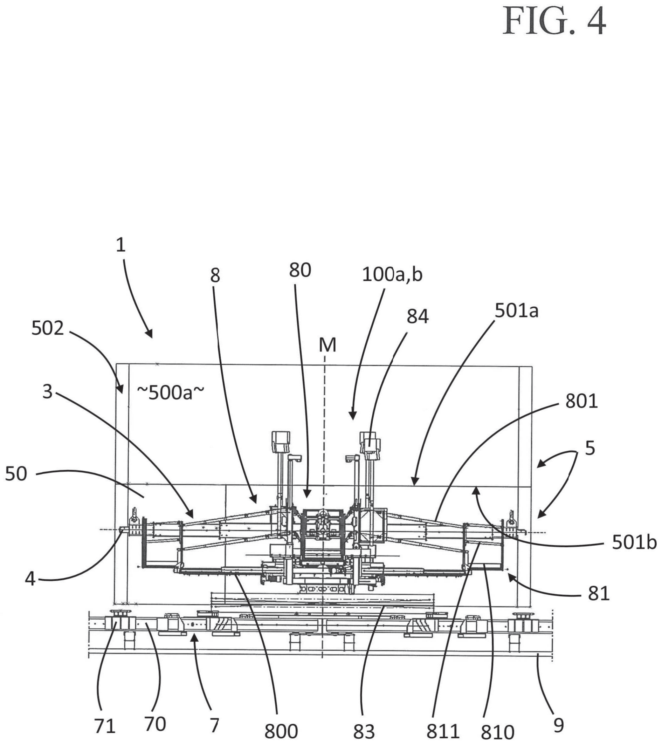

In Fig. 4 ist eine Seitenansicht auf eine Montage- und Hubanordnung 100a, b auf einem Montageplatz als Teil des Handhabungssystems 1 mit einem Montagestern 7, mit einer Montagebühne 8 und mit einer Hubvorrichtung 3 dargestellt.

Der Montagestern 7 weist mehrere Stützschienen 70 mit jeweils einem Lagerschlitten 71 auf, wobei vorliegend aus Darstellungsgründen nur zwei Stützschienen 70 dargestellt sind. Für die Montage eines Ringsegments 5 ist eine präzise Positionierung der gekrümmten Teilstücke 50 erforderlich. Daher ist der Montagestern 7 auf einer Bodenoberfläche 9 aufstehend exakt nivelliert.

Die Montagebühne 8 ist um eine Mittelachse M drehbar auf dem Montagestern 7 gelagert, und zwar um 360 ° drehbar, und weist teleskopierbare Trittflächen 800 und Absturzsicherungen 801 auf. In Verlängerung der Arbeitsplattform 80 sind Podesterweiterungen 81 angeordnet. Ferner ist eine Beleuchtungseinrichtung 84 mit entsprechender Energieversorgung und ein Scherenhub 83 dargestellt, welche eine Höhenverstellbarkeit der Arbeitsplattform 80 ermöglicht.

Um die Montagebühne 8 ist ein erstes aus drei gekrümmten Teilstücken 50 zusammengesetztes Ringsegment 5 angeordnet, wobei das erste Ringsegment 5 auf den Lagerschlitten 71 gelagert ist. Ein zweites Ringsegment 5 ist dem ersten Ringsegment 5 aufliegend angeordnet, wobei dabei die Unterkante 501b des zweiten Ringsegments der Oberkante 501a des ersten Ringsegments 5 anliegt. Aus Darstellungsgründen sind zwei Teilstücke 50 vollständig und vier Teilstücke 50 zumindest abschnittsweise transparent dargestellt, so dass die Radialflächen 502 der Teilstücke 50 zu sehen sind.

In dem vorliegenden Ausführungsbeispiel einer Hubanordnung 100b ist eine Hubvorrichtung 3 abschnittsweise unterhalb und auf Höhe der telekopierbaren Absturzsicherung 801 angeordnet, und zwar auf Höhe der Aussparungen 51 in dem ersten, unteren Ringsegment 5. Die Zapfen 4 stehen in Eingriff mit den Aussparungen 51, so dass die montierten und aufeinander liegenden Ringsegmente 5 kranunterstützt in Art eines Tandemhubs gehoben werden können, wobei aus Darstellungsgründen in Fig. 4 weder das Hebezeug noch ein Kran dargestellt sind.

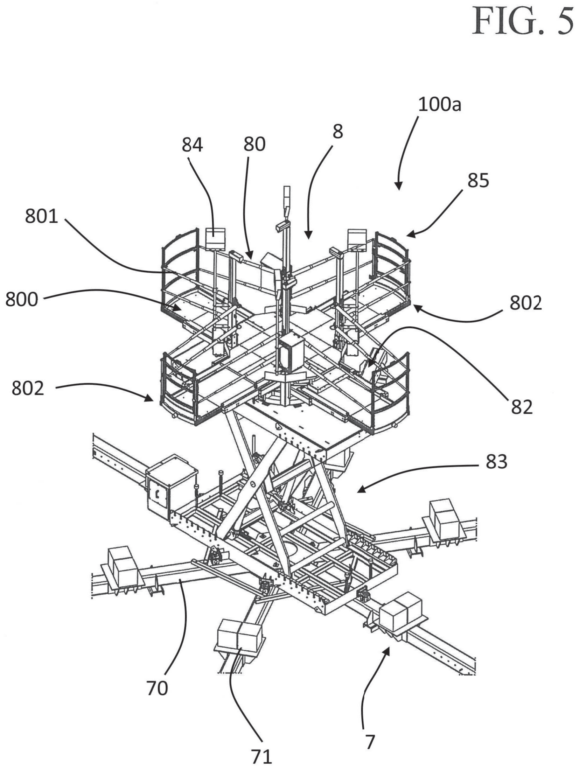

In Fig. 5 ist eine perspektivische Ansicht eines Ausschnitts einer Montageanordnung 100a mit einer Montagebühne 8 von schräg oben dargestellt. Die Montagebühne 8 weist eine Arbeitsplattform 80, welche in Art einer Kreuzbühne 85 ausgestaltet ist, und einen Drehkranz auf, wobei der Drehkranz unterhalb der Arbeitsplattform 80 angeordnet ist, so dass dieser in der Zeichnung nicht sichtbar ist. Ausgehend von einer aufrechten Mittelachse M, um die die Arbeitsplattform 80 drehbar gelagert ist, erstrecken sich strahlenförmig vier liegend ausgerichtete Verlängerungen 802 der Arbeitsplattform 80. Einer Kreuzform entsprechend sind die Verlängerungen 802 der Arbeitsplattform 80 jeweils im rechten Winkel zueinander ausgerichtet. Die Arbeitsplattform 80 weist dazu teleskopierbare Trittflächen 800 und teleskopierbare Absturzsicherungen 801 auf, die sich jeweils in die vier Radialrichtungen erstreckend ausgestaltet sind, und die einen Aktionsraum 82 begrenzen, innerhalb dessen das Personal auf der Montagebühne 8 agieren kann. Eine Beleuchtungseinrichtung 84 wirkt eingeschränkten Lichtverhältnissen entgegen. Die Montagebühne 8 ist auf einem Montagestern 7 angeordnet.

Unterhalb der Arbeitsplattform 80 und oberhalb des Montagesterns 7 ist ein Scherenhub 83 angeordnet, welcher in Fig. 5 im ausgefahrenen Modus dargestellt ist. Durch den Scherenhub 83 ist die Arbeitsplattform 80 in der Höhe verlagerbar, um beispielsweise in unterschiedlichen Höhen an einem Teilstück 50 oder an einem zweiten auf einem ersten lagernden Ringsegment 5 arbeiten zu können. Dadurch, dass der Scherenhub 83 zwischen der Drehlagerung und dem Montagestern 7 angeordnet ist, ist Arbeitsplattform 80 in unterschiedlichen Höhen drehbar gehalten, ohne dass der Scherenhub 83 dabei selbst rotiert.

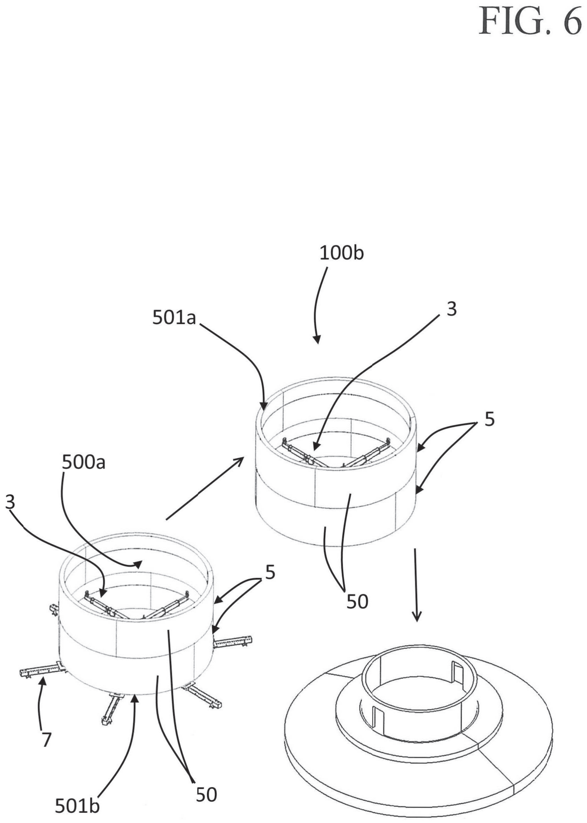

Eine perspektivische Ansicht auf eine Hubanordnung 100b in Art eines Tandemhubs von schräg oben ermöglicht Fig. 6. Zunächst ist auf einem Montagestern 7 ein erstes, unteres Ringsegment 5 dargestellt, welches den Lagerschlitten 71 der Stützschienen 70 aufliegt. Darüber, nämlich der Oberkante 501a des ersten Ringsegments 5 aufliegend, ist ein zweiten Ringsegment 5 angeordnet. Das zweite Ringsegment 5 liegt mit der Unterkante 501b dem ersten Ringsegment 5 auf und kann auf zwei Arten geschaffen worden sein: einerseits kann das zweite Ringsegment 5 auf einem weiteren, zweiten Montagestern 7 gebildet worden sein, in dem unter Zuhilfenahme einer Haltevorrichtung 2 drei Teilstücke 50 positioniert und miteinander verbunden wurden. Anschließend wurde das zweite Ringsegment 5 mittels Hubvorrichtung 3 auf das erste Ringsegment 5 gehoben. Andererseits können die Ringsegment 5 bildenden Teilstücke 50 auch direkt auf dem ersten Ringsegment 5 positioniert worden sein, so dass das zweite Ringsegment 5 nicht auf einem weiteren, zweiten Montagestern 7 gebildet wird, sondern direkt auf dem unteren, ersten Ringsegment 5.

Nach der Montage der Ringsegmente 5, jedoch vorzugsweise vor gegebenenfalls erforderlichen Installationen von Leitern, Versorgungseinrichtungen und Ähnliches, kann die Hubvorrichtung 3 zur Ausrichtung der Teilstücke 50 beziehungsweise der Ringsegmente 5 verwendet werden. Dazu wird die Hubvorrichtung 3 im Innenraum angeordnet und die Arme 31 des Traggestells 30 werden auseinandergefahren, so dass eine Druckkraft auf die innere Tangentialfläche 500a eines Bauteils eingeleitet wird und die Bauteile radial nach außen gedrückt werden können. Durch diese Maßnahme können die Bauteile in Art einer Feinjustierung zueinander ausgerichtet werden. Vorteilhaft sind die Zapfen 4 bei der Druckbeaufschlagung vor den Aussparungen 51 positioniert, um eine unbeabsichtigte Beschädigung derselben vermeiden zu können.

Anschließend an die vorteilhafte Ausrichtung werden die Zapfen 4 der Hubvorrichtung 3 in Eingriff gebracht mit den Aussparungen 51 des unteren Ringsegments 5. Hingegen liegt das obere, zweite Ringsegment 5 dem unterem, ersten Ringsegment 5 auf, ohne eine direkte Kopplung mit der Hubvorrichtung 3. Zwischen Ober- und Unterkante 501a, b kann lediglich eine Klebverbindung angeordnet sein. Vorgesehen ist, vorliegend beide Ringsegmente 5 gleichzeitig in einem Hub in Art eines Tandemhubs auf die für die Errichtung des Turms erforderliche Höhe heben zu können. In Fig. 6 aus Darstellungsgründen nicht skizziert ist ein Hebezeug mit einem damit verbundenen Kran, welche dazu dienen, die Hubvorrichtung 3 mit den Ringsegmenten 5 auf die erforderliche Höhe zu heben.

### Bezugszeichen:

- 1: Handhabungssystem
- 2: Haltevorrichtung
- 3: Hubvorrichtung
- 4: Zapfen
- 5: Ringsegment
- 6: Einhängeöse
- 7: Montagestern
- 8: Montagebühne
- 9: Bodenoberfläche
- 20: Traverse
- 21: Kippsicherung
- 22: Halteklaue
- 23: Laufräder
- 30: Traggestell
- 31: Arm
- 32: Gelenk
- 40: Freies Ende
- 41: Zapfenaufnahme
- 50: Teilstück
- 51: Aussparungen
- 70: Stützschienen
- 71: Lagerschlitten
- 72: Anschlusselement
- 80: Arbeitsplattform
- 81: Podesterweiterung
- 82: Aktionsraum
- 83: Scherenhub
- 84: Beleuchtungseinrichtung
- 85: Kreuzbühne
- 200: Doppelt-T-Träger
- 210: Flächenanschlag
- 211: Kantenanschlag
- 212: Querbalken
- 213: Arbeitszylinder
- 220: Halteklauenantrieb
- 221: Tiefenanschlag
- 300: Kreuzgestell
- 310: Teleskopschiene
- 320: Gelenkplatte
- 321: Arretierbolzen
- 322: Seitenanschlag
- 500a: Innere Tangentialfläche
- 500b: Äußere Tangentialfläche
- 501a: Oberkante
- 501b: Unterkante
- 502: Radialfläche
- 510: Tasche
- 800: Teleskopierbare Trittfläche
- 801: Teleskopierbare Absturzsicherung
- 802: Verlängerung
- 810: Podesttrittfläche
- 811: Podestabsturzsicherung
- 100a: Montageanordnung
- 100b: Hubanordnung
- α: Öffnungswinkel
- β: Armöffnungswinkel
- S: Schwenkachse
- L: Längsachse
- M: Mittelachse
- GS: Gebrauchsstellung

## Patentansprüche

1. System (1) zur Handhabung von Bauteilen,
mit einer Hebevorrichtung, welche Lastaufnahmemittel aufweist zur wahlweise lösbaren Verbindung mit einem Bauteil,
wobei die Bauteile zur Errichtung eines Turmbauwerks bestimmt sind,
wobei das Turmbauwerk aus mehreren übereinander gesetzten Ringsegmenten (5) aufgebaut ist und jeweils mehrere, gekrümmte Teilstücke (50) umfangmäßig ein Ringsegment (5) bilden,
wobei ein Teilstück (50) umlaufende Kanten in Form jeweils einer Ober- und Unterkante (501a, 501b) und zweier Radialflächen (502) aufweist sowie eine innere und eine äußere Tangentialfläche (500a, 500b),
und wobei ein Teilstück (50) Anhängemittel aufweist, welche zur Verbindung mit den Lastaufnahmemitteln bestimmt sind,
**dadurch gekennzeichnet,**
**dass** die Anhängemittel als Aussparungen (51) ausgestaltet sind und die Aussparungen (51) dazu bestimmt sind, Lastaufnahmemittel aufzunehmen,
wobei eine Tangentialfläche wenigstens zwei Aussparungen (51) aufweist und die Verbindung ferneinstellbar ist,
und wobei vorzugsweise die innere Tangentialfläche (500a) die Aussparungen (51) aufweist,
und **dass** das System (1) eine als Haltevorrichtung (2) bezeichnete Hebevorrichtung aufweist, die dazu bestimmt ist,
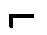 ein als Gussteil hergestelltes Teilstück (50) während der Entnahme aus einer Gießform zu halten
und/oder
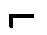 ein Teilstück (50) während des Ladens eines Transportmittels zu halten
und/oder
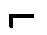 ein Teilstück (50) während der Positionierung zur Bildung eines Ringsegments (5) zu halten,
und **dass** das System (1) eine als Hubvorrichtung (3) bezeichnete Hebevorrichtung aufweist, die dazu bestimmt ist,
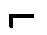 ein Ringsegment (5) bei der Errichtung des Turmbauwerks auf die erforderliche Höhe zu heben und/oder
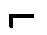 ein Ringsegment (5) und/oder ein Teilstück auszurichten.

2. Handhabungssystem (1) nach Anspruch 1,
**dadurch gekennzeichnet,**
**dass** wenigstens zwei Aussparungen (51) umfangmäßig beabstandet voneinander angeordnet sind,
wobei vorzugsweise die Aussparungen (51) ebenengleich angeordnet sind,
und wobei vorzugsweise die Lastaufnahmemittel jeweils eine liegend ausgerichtete Längsachse (L) aufweisen,
wobei zwei Längsachsen (L) unter Ausbildung eines Öffnungswinkels (α) zwischen 25 ° und 95 ° zueinander ausgerichtet sind.

3. Handhabungssystem (1) nach einem der vorhergehenden Ansprüche,
**dadurch gekennzeichnet,**
**dass** die Lastaufnahmemittel als Zapfen (4) ausgestaltet sind.

4. Handhabungssystem (1) nach einem der vorhergehenden Ansprüche,
**dadurch gekennzeichnet,**
**dass** die Gießform mehrere Seitenwände und einen Boden aufweist,
wobei eine Seitenwand wenigstens eine wahlweise öffnenbare Zugriffsöffnung aufweist, die mit einem oberen Rand der Gießform verbunden ist, in der Art, dass ein Teilstück nach dem Abbinden mittels Haltevorrichtung (2) aus der Gießform entnehmbar ist,
wobei vorzugsweise Seitenwände und Boden einen Schalungsraum in Form eines Teilstücks (50) umgeben und im Schalungsraum Einsätze in Geometrie der Aussparungen (51) angeordnet sind, wobei die Einsätze einer Seitenwand anliegen.

5. Handhabungssystem (1) nach einem der vorhergehenden Ansprüche,
**dadurch gekennzeichnet,**
**dass** die Haltevorrichtung (2) eine Traverse (20) aufweist, mit wenigstens zwei entlang der Traverse (20) verfahrbar gelagerten Halteklauen (22),
wobei jede Halteklaue (22) unterhalb der Traverse (20) einen liegend ausgerichteten Zapfen (4) mit einem freien Ende (40) aufweist,
wobei das freie Ende (40) dazu bestimmt ist, in eine Aussparung eines Teilstücks (50) des Ringsegments (5) eingeführt zu werden,
wobei die freien Enden (40) dazu bestimmt sind, in jeweils eine Aussparung desselben Teilstücks (50) eingeführt zu werden,
und **dass** die Haltevorrichtung (2) eine Anschlussvorrichtung mit Anschlussmitteln für ein Hebezeug aufweist, derart, dass mittels des Hebezeugs die Haltevorrichtung (1) samt eines daran hängenden Teilstücks (50) anhebbar ist,
und **dass** die Haltevorrichtung (2) eine Kippsicherung (21) mit einem Kippanschlag aufweist,
wobei der Kippanschlag dazu bestimmt ist, einem Teilstück (50) in der Art anzuliegen, dass in einer Gebrauchsstellung (GS) das Teilstück (50) gegen eine Kippbewegung um eine durch die Zapfen (4) verlaufende Kippachse gesichert ist.

6. Handhabungssystem (1) nach einem der vorhergehenden Ansprüche,
**dadurch gekennzeichnet,**
**dass** die Hubvorrichtung (3) ein Traggestell (30) und eine Lastaufnahmevorrichtung aufweist,
wobei die Lastaufnahmevorrichtung dazu bestimmt ist, eine lastübertragungswirksame, wahlweise lösbare Verbindung mit einem Ringsegment (5) bereitzustellen,
und wobei die Lastaufnahmevorrichtung wenigstens zwei an dem Traggestell (30) angeordnete Lastaufnahmemittel aufweist,
wobei die Lastaufnahmemittel als Zapfen (4) ausgestaltet sind,
wobei die Zapfen (4) sich in divergierende Richtungen erstrecken und jeweils ein freies Ende (40) aufweisen, und die freien Enden (40) die äußeren Punkte des Traggestells (30) bilden,
und wobei die Zapfen (4) in der Art fernverstellbar sind, dass der Abstand zwischen den freien Enden (40) veränderlich ist. und dass die Hubvorrichtung (3) eine Anschlussvorrichtung aufweist,
welche dazu bestimmt ist, eine Verbindung mit einem Hebezeug bereitzustellen, derart, dass mittels des Hebezeugs die Hubvorrichtung (3) samt eines daran hängenden Ringsegments (5) anhebbar ist,
wobei die Anschlussvorrichtung wenigstens zwei endseitig an dem Traggestell (30) und nahe der Lastaufnahmevorrichtung angeordnete Anschlussmittel aufweist.

7. Handhabungssystem (1) nach einem der vorhergehenden Ansprüche,
**gekennzeichnet durch**
eine Montagebühne (8), die dazu bestimmt ist, eine Arbeitsumgebung für das Personal bereitzuhalten
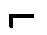 während der Positionierung der Teilstücke (50)
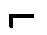 und/oder während der Ausrichtung der Teilstücke (50)
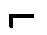 und/oder während einer Montage der Teilstücke (50) zu Ringsegmenten (5)
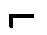 und/oder während der Ausrichtung der Ringsegmente (5),
und die dazu bestimmt ist, auf einem Montageplatz angeordnet zu sein,
mit einer Arbeitsplattform (80),
welche dazu bestimmt ist, beabstandet von einer Bodenoberfläche (9) angeordnet zu werden,
und welche eine begehbare Trittfläche aufweist,
und welche oberhalb der Trittfläche eine Absturzsicherung aufweist,
wobei die Absturzsicherung einem Grundriss der Trittfläche zumindest abschnittsweise folgend ausgestaltet ist,
und wobei die Trittfläche und die Absturzsicherung einen Aktionsraum (82) begrenzen,
und wobei die Montagebühne (8) unterhalb der Arbeitsplattform (80) eine Drehlagerung aufweist, derart, dass die Arbeitsplattform (80) um eine aufrechte Mittelachse (M) drehbar ist.

8. Verfahren zur Errichtung eines Turmbauwerks,
wobei das Turmbauwerk aus mehreren übereinander gesetzten Ringsegmenten (5) aufgebaut ist und jeweils mehrere, gekrümmte Teilstücke (50) umfangmäßig ein Ringsegment (5) bilden,
wobei ein Teilstück (50) umlaufende Kanten in Form jeweils einer Ober- und Unterkante (501a, 501b) und zweier Radialflächen (502) aufweist sowie eine innere und eine äußere Tangentialfläche (500a, 500b),
wobei eine Tangentialfläche wenigstens zwei Aussparungen (51) aufweist, die dazu bestimmt sind, Lastaufnahmemittel einer Hebevorrichtung aufzunehmen,
mit den folgenden Verfahrensschritten:
a) Positionieren von mehreren Teilstücken (50) auf einem Untergrund mittels einer als Haltevorrichtung (2) bezeichneten Hebevorrichtung, in der Art, dass Radialflächen (502) der Teilstücke (50) einander anliegen, wobei die Lastaufnahmemittel der Haltevorrichtung (2) in Eingriff gebracht werden mit den Aussparungen (51) des Teilstücks (50),
und verbinden der Teilstücke (50) miteinander ausbildend ein Ringsegment (5),
b) Heben eines Ringsegments (5) mittels einer als Hubvorrichtung (3) bezeichneten Hebevorrichtung auf die erforderliche Höhe zur Errichtung des Turmbauwerks, wobei die Lastaufnahmemittel der Hubvorrichtung (3) in Eingriff gebracht werden mit den Aussparungen (51) des Ringsegments (5).

9. Verfahren nach Anspruch 8,
**dadurch gekennzeichnet,**
**dass** ein Teilstück (50) vor Schritt a) aus einer Gießform entnommen wird mittels Haltevorrichtung (2).

10. Verfahren nach Anspruch 8 oder 9,
**dadurch gekennzeichnet,**
**dass** ein Transportfahrzeug vor Schritt a) mit einem Teilstück (50) beladen wird und/oder dass ein Teilstück (50) von einem Transportfahrzeug entladen wird,
wobei zum Laden die Haltevorrichtung (2) verwendet wird.

11. Verfahren nach einem der Ansprüche 8 bis 10,
**dadurch gekennzeichnet,**
**dass** vor Schritt b) die Schritte a) wiederholt wird, in der Art, dass weitere Teilstücke (50) auf dem Ringsegment (5) mittels der Haltevorrichtung (2) abgesetzt werden und die weiteren Teilstücke (2) montiert werden zur Schaffung eines auf dem ersten Ringsegment (5) lagernden zweiten Ringsegments (5).

12. Verfahren nach einem der Ansprüche 8 bis 11,
**dadurch gekennzeichnet,**
**dass** während Schritt b) die Teilstücke (50) und/oder das Ringsegment (5) ausgerichtet werden mittels der Hubvorrichtung (3).

13. Verfahren nach einem der Ansprüche 8 bis 12,
**dadurch gekennzeichnet,**
**dass**
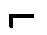 gemäß Schritt a) mehrere Teilstücke (50) auf einem ersten Untergrund positioniert werden und die Teilstücke (50) montiert werden zur Schaffung eines ersten Ringsegments (5),
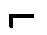 und gemäß Schritt a) mehrere Teilstücke (50) auf einem zweiten Untergrund positioniert werden und die Teilstücke (50) montiert werden zur Schaffung eines zweiten Ringsegments (5),
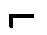 anschließend das zweite Ringsegment (5) mittels Hubvorrichtung (3) gehoben wird und auf das erste Ringsegment (5) gehoben wird,
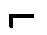 anschließend gemäß Schritt b) die Hubvorrichtung (3) in Eingriff gebracht wird mit dem unteren, ersten Ringsegment (5) und das erste Ringsegment (5) gehoben wird mitsamt dem auf dem ersten Ringsegment (5) lagernden zweiten Ringsegment (5),
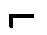 und anschließend die beiden Ringsegmente (5) zur Erstellung des Turmbauwerks auf ein bereits angeordnetes, weiteres Ringsegment (5) oder auf einem vorbereiteten Turmfundament abgesetzt werden.

14. Verfahren nach einem der Ansprüche 8 bis 13,
**dadurch gekennzeichnet,**
**dass** ein Montagestern (7) verwendet wird, welcher auf einem Untergrund gelagert ist,
wobei Teilstücke (50) auf dem Montagestern (7) positioniert werden.

15. Verfahren nach einem der Ansprüche 8 bis 14,
**dadurch gekennzeichnet,**
**dass** ein System (1) nach einem der Ansprüche 1 bis 7 zur Umsetzung des Verfahrens verwendet wird.
